# EUROPÄISCHE PATENTSCHRIFT

(11) **EP 1 612 436 B1**
(45) Veröffentlichungstag und Bekanntmachung des Hinweises auf die Patenterteilung: **05.10.2011**
(21) Anmeldenummer: 05012821.4
(22) Anmeldetag: 15.06.2005
(51) Int. Cl.: F16C 29/00, F16C 29/06

(54) **Profilschienenführung**
Linear bearing with profiled rail
Guide linéaire avec rail profilé

(30) Priorität: 30.06.2004 DE 102004031497
(43) Veröffentlichungstag der Anmeldung: 04.01.2006
(73) Patentinhaber: Schaeffler Technologies GmbH & Co. KG, 91074 Herzogenaurach (DE)
(72) Erfinder: Bauer, Wolfgang, 66292 Riegelsberg (DE); Rudy, Bettina, 66501 Kleinbundenbach (DE)

(56) Entgegenhaltungen:
- EP-A- 0 080 515
- EP-A- 0 795 692
- EP-A- 1 172 574
- DE-A1- 4 222 029
- DE-A1- 4 413 373
- DE-A1- 4 439 804
- GB-A- 979 339
- US-A- 4 552 416
- US-A- 4 941 197
- US-A1- 2001 015 581

## Beschreibung

### Gebiet der Erfindung

Die Erfindung betrifft eine Profilschienenführung mit einem Laufwagen, der sich mit einem Tragkörper an einer Führungsschiene abstützt, längs welcher er an Laufbahnen verschiebbar gelagert ist, die sich an den beiden Längsseiten der Führungsschiene befinden, wobei in die Führungsschiene sowohl eine von der Fußfläche ausgehende untere Längsnut als auch eine von der Kopffläche der Führungsschiene ausgehende obere Längsnut eingearbeitet ist.

### Hintergrund der Erfindung

Führungen werden beispielsweise an Werkzeugmaschinen eingesetzt. Sie haben dort die Aufgabe, Bauteilen zur Ausführung von Vorschub- oder Schnittbewegungen eine exakte lineare Bewegungsbahn zu geben. Dabei besteht in vielen Anwendungen ein Bedarf an hohen Verfahrgeschwindigkeiten bzw. entsprechend hohen Beschleunigungen.

Aus der Patentschrift DE 44 13 373 C2 ist ein Linearlager als Profilschienenführung der eingangs genannten Art bekannt, dessen Laufwagen-Tragkörper und dessen Führungsschiene massiv ausgeführt sind. Ein solches Standardsystem weist zwar eine hohe Steifigkeit seiner Bauteile auf, es hat jedoch den Nachteil, dass bei der hin- und hergehenden Bewegung jeweils eine große Masse periodisch beschleunigt und wieder abgebremst werden muss, je nachdem, welches der beiden Bauteile relativ zu dem anderen bewegt wird, so dass ein hoher Energieverbrauch die Folge ist.

Aus der Offenlegungsschrift DE 43 13 074 A1 ist es bereits bekannt, für eine Führungsschiene für rollende Lastenträger ein stranggepresstes Hohlkammerprofil zu verwenden, um den Materialaufwand gering zu halten. Hier sind die Hohlkammern der Führungsschiene im Wesentlichen aber nur von deren Stirnseiten aus zugänglich.

Aus dem Dokument US 4 552 416 A ist eine gattungsgemäße Profilschienenführung bekannt, bei deren Führungsschiene die Längsnuten jeweils einen U-förmigen Querschnitt mit parallelen Flanken aufweisen. Die obere Längsnut ist für die Einlage eines flexiblen Abdeckstreifens aus plastischem Material vorgesehen, der den Eintritt von Schmutz oder dergleichen verhindern soll.

Die untere Längsnut ist vorgesehen, damit die Führungsschiene mit engen Toleranzen auf eine Rippe einer profilierten Montageschiene oder eines Maschinenbettes aufgesteckt und dann dort befestigt werden kann.

Der Erfindung liegt die Aufgabe zugrunde, eine möglichst leichte Profilschienenführung zu schaffen, welche für hochdynamische Anwendungen geeignet ist, wobei durch eine Gewichtsreduzierung der für eine solche Führung verwendeten Bauteile sich die erforderliche Antriebsleistung verringern lassen soll.

Diese Aufgabe wird erfindungsgemäß dadurch gelöst, dass die Längsnuten zur Verringerung der Masse der Führungsschiene im Querschnitt dreieckförmig oder trapezförmig ausgebildet sind und sich eine Dreiecksseite bzw. die längere parallele Trapezseite der unteren bzw. oberen Längsnut in der Ebene der Fuss- bzw. Kopffläche befindet. Bei

Anwendungen, in welchen nur die Führungsschiene bewegt wird, erhält diese starke Beschleunigungen. Durch die Gewichtsreduzierung der Führungsschiene lässt sich die erforderliche Antriebsleistung verringern und somit also die erfindungsgemäße Aufgabe lösen.

Eine im Querschnitt trapezförmige Längsnut kann jeweils ein der längeren parallelen Trapezseite entsprechendes Breitenmaß aufweisen, welches gleich 3/4 der Breite der Führungsschiene ist. Außerdem kann hier jeweils ein Trapezhöhenmaß vorgesehen werden, welches gleich 1/3 der Höhe der Führungsschiene ist.

In die untere Längsnut und/oder in die obere Längsnut kann jeweils ein Füllkörper aus leichtem steifen Werkstoff eingesetzt sein. Dieser kann ein kohlefaserverstärkter Kunststoff sein.

### Kurze Beschreibung der Zeichnung

Ein Ausführungsbeispiel der Erfindung ist in der Zeichnung dargestellt und wird im Folgenden näher beschrieben. Es zeigen
- Figur 1: eine Führungsschiene mit einem längs dieser verfahrbaren Tragkörper in perspektivischer Ansicht;
- Figur 2: die Führungsschiene in perspektivischer Ansicht;
- Figur 3: die Profilschienenführung gemäß Figur 1 in stirnseitiger Ansicht.

### Ausführliche Beschreibung der Zeichnung

Eine Profilschienenführung weist eine geradlinige Führungsschiene 1 auf, die an ihren beiden Längsseiten mit Laufbahnen 2 versehen ist. An diesen ist ein U-förmiger Tragkörper 3 mit seinem beiden U-Schenkeln über Wälzkörper 4 abgestützt. Er umfasst die Führungsschiene 1 teilweise. Die Wälzkörper 4 können beispielsweise in dem Tragkörper 3 in endlosen Umläufen angeordnete Kugeln sein. Sie ermöglichen ein Entlangfahren des Tragkörpers 3 an der Führungsschiene 1 in deren Längsrichtung.

Um die Masse des Tragkörpers 3 möglichst gering zu halten, sind in diesen in seinem U-Steg-Bereich drei parallele Längsausnehmungen angeordnet. Eine mittlere Längsausnehmung 5 in der Form einer Bohrung ist von zwei seitlichen Längsausnehmungen 6 in der Form von Langlöchern umgeben. Außerdem ist zur Verringerung der Masse in dem Tragkörper 3 in dem U-Steg-Bereich eine Querausnehmung 7 angeordnet, die sich dort rechtwinklig zu den Längsausnehmungen 5 und 6 erstreckt.

Zur Verringerung der Masse der Führungsschiene 1 sind in dieser zwei Nuten angeordnet, die sich in Längsrichtung der Führungsschiene erstrecken. Davon geht eine untere Längsnut 8 von der ebenen Fußfläche 9 und eine obere Längsnut 10 von der ebenen, zu der Fußfläche 9 parallelen Kopffläche 11 der Führungsschiene 1 aus. Die beiden Längsnuten 8 und 10 sind im Querschnitt jeweils trapezförmig ausgebildet, und zwar befindet sich von der unteren Längsnut 8 die längere parallele Trapezseite in der Ebene der Fußfläche 9, während sich von der oberen Längsnut 10 die längere parallele Trapezseite in der Ebene der Kopffläche 11 befindet.

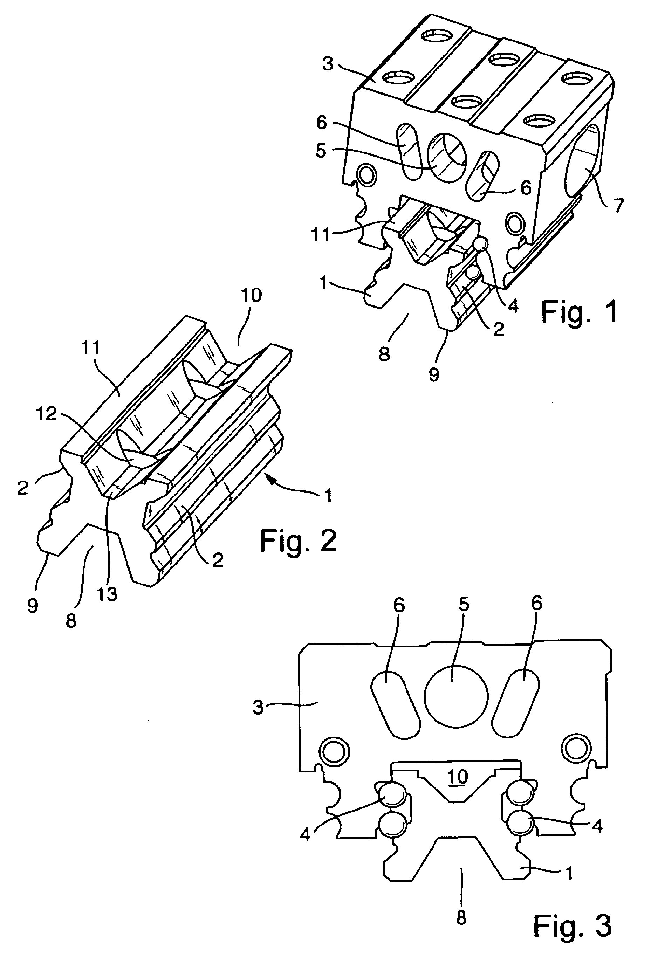

Wie man aus Figur 1 erkennt, ist die dort gezeigte Führungsschiene 1 mit dem Tragkörper 3 eine Kugelumlaufführung, bei welcher an jeder Längsseite der Führungsschiene 1 und dem entsprechenden U-Schenkel des Tragkörpers 3 zwei Umläufe von Wälzkörpern 4 angeordnet sind. Die Außenabmessungen der Führungsschiene 1 und des Tragkörpers 3 entsprechen denjenigen der entsprechenden Bauteile des eingangs erwähnten Standardsystems. Das erfindungsgemäße System hat die gleiche Tragzahl wie das Standardsystem. Auf Grund der Gewichtsreduzierung ist die Steifigkeit des erfindungsgemäßen Systems geringer als bei dem Standardsystem, beträgt aber deutlich mehr als 50% der Steifigkeit des Standardsystems.

Die auch in Figur 2 dargestellte Führungsschiene 1 weist eine Gewichtsreduzierung auf einen Wert von 70% des Gewichtes der Standard-Führungsschiene auf. Die Gewichtsreduzierung ist durch die beiden trapezförmigen Längsnuten 8 und 10, die von der Fußfläche 9 und von der Kopffläche 11 ausgehen, erreicht worden. Statt der im Querschnitt trapezförmigen Längsnuten 8 und 10 können auch Nuten angeordnet werden, die im Querschnitt dreieckförmig sind. Die Größe des Trapezes kann an der äußeren Seite ca. 2/3 und im Inneren weniger als 1/3 der Breite der Führungsschiene 1 betragen. Die Höhe des Trapezes beträgt beispielsweise ca. 1/3 der Führungsschienenhöhe.

Die Verwendung von Schrauben zur Befestigung der Führungsschiene 1 an ihrem Anschlussbauteil, welche in Schraubenlöcher 12 der Führungsschiene 1 eingesteckt werden, bewirkt eine Erhöhung der Steifigkeit der Führungsschiene. Zur weiteren Erhöhung der Steifigkeit kann die Ebene der Schraubenauflagefläche 13 der erfindungsgemäßen Führungsschiene 1 sich in ihrer Höhe von der Fußfläche 9 von derjenigen einer Standardschiene unterscheiden. In diesem Fall sind Schrauben mit reduzierter Kopfhöhe zu verwenden. Durch Einlegen von Füllkörpern aus geeigneten Werkstoffen, z.B. aus GFK oder CFK, in die untere Längsnut 8 und/oder in die obere Längsnut 9 kann die Steifigkeit der Führungsschiene 9 außerdem erhöht werden. In diesem Fall lässt sich fast die gleiche Steifigkeit wie bei einer Standardschiene erreichen, wobei aber das Gewicht der so gefüllten Führungsschiene 70% des Gewichtes der entsprechenden Standardschiene nicht überschreitet.

Bei der erfindungsgemäßen Profilschienenführung sind die Führungsschiene 1 und der Tragkörper 3 nur in den auf Druck-, Zug- und Seitenkräfte beanspruchten Bereichen massiv ausgeführt. Der Tragkörper 3 weist sowohl in seiner Längsrichtung als auch in der dazu quer verlaufenden Richtung größtmögliche Freimachungen auf. Dies wird durch die Längsausnehmungen 5 und 6 und die Querausnehmung 7, welche alle auch den mittleren Bereich des Tragkörpers 3 freimachen, erreicht. Bei der Führungsschiene 1 ist das parallel zu den Laufbahnen 2 sich erstreckende, nicht belastete Material entfernt worden, was durch die Anordnung der unteren Längsnut 8 und der oberen Längsnut 10 erreicht wurde.

Wenn nur der Laufwagen bewegt wird und somit auch starke Beschleunigungen erhält, kann in Abhängigkeit von dieser Anwendung der erfindungsgemäße Tragkörper 3 auch mit einer Standardschiene kombiniert werden. Wenn jedoch nur die Führungsschiene 1 bewegt wird und somit auch starke Beschleunigungen erhält, kann sie in Abhängigkeit von dieser anderen Anwendung auch mit Standardtragkörpern kombiniert werden.

### Bezugszahlenliste

- 1: Führungsschiene
- 2: Laufbahn
- 3: Tragkörper
- 4: Wälzkörper
- 5: mittlere Längsausnehmung
- 6: seitliche Längsausnehmung
- 7: Querausnehmung
- 8: untere Längsnut
- 9: Fußfläche
- 10: obere Längsnut
- 11: Kopffläche
- 12: Schraubenloch
- 13: Schraubenauflagefläche

## Patentansprüche

1. Profilschienenführung mit einem Laufwagen, der sich mit einem Tragkörper (3) an einer Führungsschiene (1) abstützt, längs welcher er an Laufbahnen (2) verschiebbar gelagert ist, die sich an den beiden Längsseiten der Führungsschiene (1) befinden, wobei in die Führungsschiene (1) sowohl eine von deren Fußfläche (9) ausgehende untere Längsnut (8) als auch eine von der Kopffläche (11) der Führungsschiene (1) ausgehende obere Längsnut (10) eingearbeitet ist, **dadurch gekennzeichnet, dass** die Längsnuten (8, 10) zur Verringerung der Masse der Führungsschiene (1) im Querschnitt dreieckförmig odertrapezförmig ausgebitdet sind und sich eine Dreiecksseite bzw. die längere parallele Trapezseite der unteren bzw oberen befindet.
Längsnuts (6, 10) in der Ebene der Fuß- bzw. Kopffläche (9, 11) befindet.

2. Schienenführung nach Anspruch 1, **dadurch gekennzeichnet, dass** eine im Querschnitt trapezförmige Längsnut (8, 10) jeweils ein der längeren parallelen Trapezseite entsprechendes Breitenmaß aufweist, welches gleich 3/4 der Breite der Führungsschiene (1) ist.

3. Schienenführung nach Anspruch 1, **dadurch gekennzeichnet, dass** eine im Querschnitt trapezförmige Längsnut (8, 10) jeweils eine Trapezhöhe aufweist, welche gleich 1/3 der Höhe der Führungsschiene (1) ist.

4. Schienenführung nach Anspruch 1, **dadurch gekennzeichnet, dass** in die untere Längsnut (8) und/oder in die obere Längsnut (10) jeweils ein Füllkörper aus einem leichten steifen Werkstoff eingesetzt ist.

5. Schienenführung nach Anspruch 4, **dadurch gekennzeichnet, dass** der Werkstoff des Füllkörpers ein kohlefaserverstärkter Kunststoff ist.

## Claims

1. Profiled rail guideway having a track carriage supported with a carrier body (3) on a guide rail (1) along which it is mounted in a displaceable fashion on raceways (2) which are located on the two longitudinal sides of the guide rail (1), wherein a lower longitudinal groove (8) which starts from the foot surface (9) of the guide rail (1) and an upper longitudinal groove (10) which starts from the head surface (11) of the guide rail (1) are embedded in the guide rail (1), **characterized in that** the longitudinal grooves (8, 10) of the guide rail (1) are embodied with a triangular or trapezoidal cross section in order to reduce the mass, and a triangular side or the relatively long parallel trapezoidal side of the lower or upper longitudinal groove (8, 10) is located in the plane of the foot surface or head surface (9, 11).

2. Rail guideway according to Claim 1, **characterized in that** a longitudinal groove (8, 10) which is trapezoidal in cross section has in each case width dimension which corresponds to the relatively long parallel trapezoidal side and which is equal to 3/4 of the width of the guide rail (1).

3. Rail guideway according to Claim 1, **characterized in that** a longitudinal groove (8, 10) which is trapezoidal in cross section has in each case a trapezoidal height which is equal to 1/3 of the height of the guide rail (1).

4. Rail guideway according to Claim 1, **characterized in that** in each case a filler element made of a lightweight rigid material is inserted into the lower longitudinal groove (8) and/or into the upper longitudinal groove (10).

5. Rail guideway according to Claim 4, **characterized in that** the material of the filler element is a carbon-fibre-reinforced plastic.

## Revendications

1. Guide à rail profilé comprenant un chariot de roulement, qui s'appuie avec un corps porteur (3) contre un rail de guidage (1), le long duquel il est monté de manière déplaçable sur des pistes de roulement (2), qui se trouvent sur les deux côtés longitudinaux du rail de guidage (1), dans le rail de guidage (1) étant pratiquées à la fois une rainure longitudinale inférieure (8) partant de sa surface de base (9) ainsi qu'une rainure longitudinale supérieure (10) partant de la surface de tête (11) du rail de guidage (1), **caractérisé en ce que** les rainures longitudinales (8, 10) sont réalisées en vue de réduire la masse du rail de guidage (1), avec une section transversale triangulaire ou trapézoïdale, et un côté du triangle ou le côté du trapèze parallèle plus long de la rainure longitudinale inférieure, respectivement supérieure, (8, 10) se trouvant dans le plan de la surface de base, respectivement de tête (9, 11).

2. Guide à rail selon la revendication 1, **caractérisé en ce qu'**une rainure longitudinale (8, 10) de section transversale trapézoïdale présente à chaque fois une dimension en largeur correspondant au côté du trapèze parallèle plus long, qui est égale à 3/4 de la largeur du rail de guidage (1).

3. Guide à rail selon la revendication 1, **caractérisé en ce qu'**une rainure longitudinale (8, 10) de section transversale en forme de trapèze présente à chaque fois une hauteur de trapèze qui est égale à 1/3 de la hauteur du rail de guidage (1).

4. Guide à rail selon la revendication 1, **caractérisé en ce qu'**un corps de remplissage en un matériau léger et rigide est inséré dans la rainure longitudinale inférieure (8) et/ou dans la rainure longitudinale supérieure (10).

5. Guide à rail selon la revendication 4, **caractérisé en ce que** le matériau du corps de remplissage est un plastique renforcé par des fibres de carbone.
